# EUROPEAN PATENT SPECIFICATION

(11) **EP 2 581 159 B1**
(45) Date of publication and mention of the grant of the patent: **10.09.2014**
(21) Application number: 12185923.5
(22) Date of filing: 25.09.2012
(51) Int. Cl.: B23C 3/35, B23P 15/00

(54) **Improved key duplicating machine.**
Verbesserte Schlüsselkopiermaschine.
Duplicateur de clé amélioré.

(30) Priority: 14.10.2011 IT VE20110018 U
(43) Date of publication of application: 17.04.2013
(73) Proprietor: SILCA S.p.A., 31029 Vittorio Veneto (IT)
(72) Inventor: Cettolin, Moreno, 31029 VITTORIO VENETO (IT); Pigatti, Giorgio, 31029 VITTORIO VENETO (IT)
(74) Representative: Piovesana, Paolo

(56) References cited:
- WO-A1-95/23666
- FR-A5- 2 110 582
- US-A1- 2003 202 851
- US-B1- 7 486 386

## Description

The present invention relates to key duplicating machines according to the preamble of claim 1. Duplicating machines are known provided with a pair of clamps for clamping an original key to be duplicated and a key blank to be bitted in accordance with the original key. A feeler is associated with the clamp for the original key to sense the individual notches of the bitting pattern, whereas with the clamp for the key blank to be bitted a milling cutter is associated supported by a support structure rigid with the feeler, to form bitting notches in the key blank corresponding to those sensed by the feeler in the original key.

All duplicating machines are generally provided with a lamp to illuminate the operative area, and more precisely to illuminate the original key, to enable the operator to correctly position the feeler on the individual notches of the original key, especially if this is of dimple type.

The lamp of a duplicating machine is currently activated by the operator by means of a switch, which in certain cases can also be the switch of the milling cutter itself. The lamp has then to be switched off by the same operator on termination of the work.

WO 95/23666 discloses a traditional duplicating machine wherein the lamp does not illuminate the operative area; in particular, it is provided with LEDs which are used to illuminate from the rear the indicators of the panel in order to signal to the user if there is an alignment between the feeler and the milling cutter of the machine in respect of the keys held by the clamps.

FR 2110582 discloses a key duplicating machine provided with a lamp that illuminates the operative area. The lamp is commanded by means of a toggle switch placed on the front wall of the machine.

However, very often the operator has his hands engaged, either because he has to hold both the key blank and the original key, or because he has to operate the clamps, or because he has to replace the feeler and/or the cutter.

Moreover for its operation, the switch is very often positioned for appearance, safety or machine type reasons on the side of the machine and cannot be easily located or operated.

An object of the invention is to eliminate these drawbacks by making the use of duplicating machines more comfortable and simple.

These and other objects which will be apparent from the ensuing description are attained, according to the invention, by an improved key duplicating machine provided with an illuminating lamp as described in claim 1.

The present invention is further clarified hereinafter with reference to the accompanying drawings, in which:

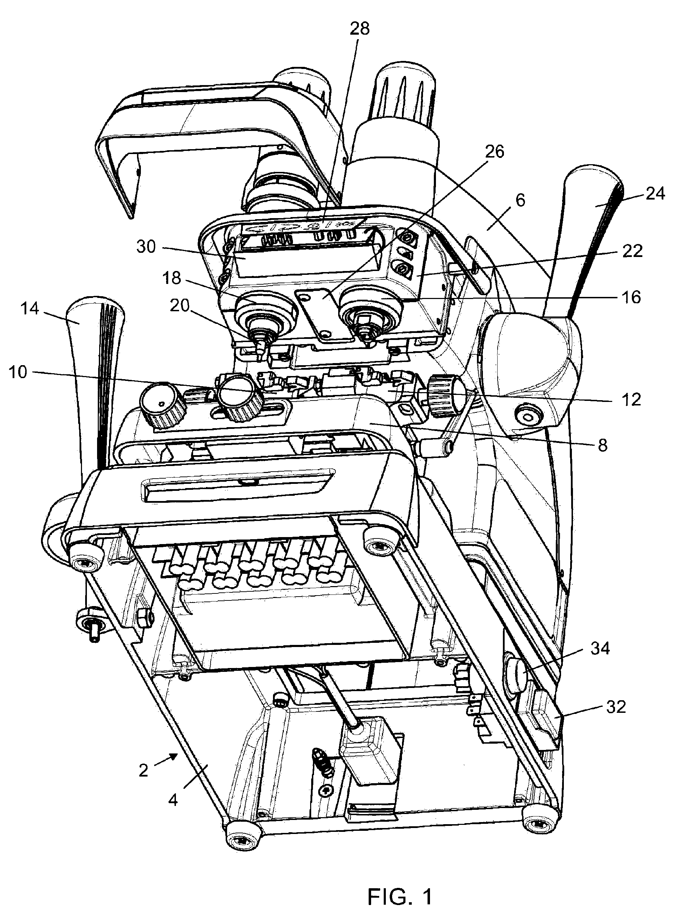

- Figure 1: is a perspective view from below showing a duplicating machine according to the invention in the lamp deactivated condition, and

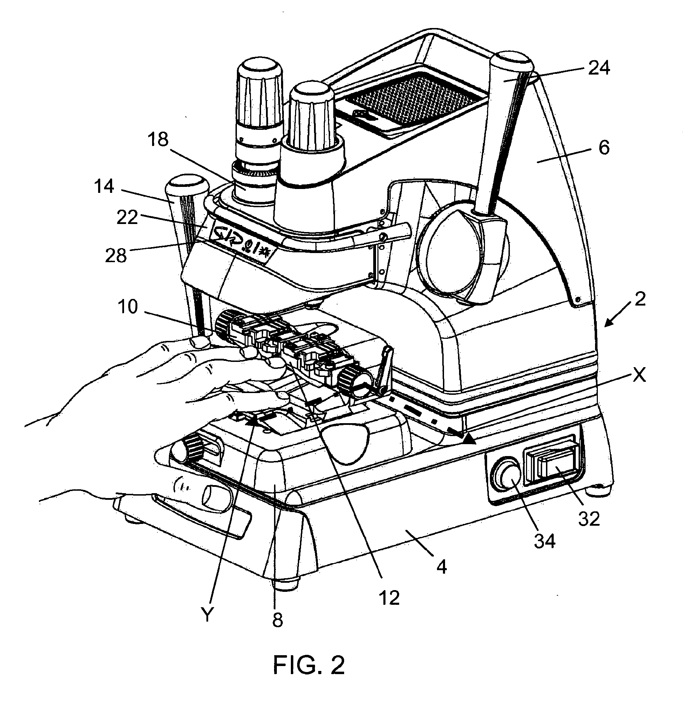

- Figure 2: shows it in perspective view from above in the lamp activated condition.

As can be seen from the figures, the duplicating machine according to the invention comprises, as in the case of all duplicating machines, a covered structure indicated overall by 2, with a base 4 for resting on the worktable and with a column 6 starting from the base 4 and extending upwards and forwards in an arched manner.

The base 4 supports a traditional slide 8 supporting two clamps 10 and 12 for an original key to be duplicated and for a key blank to be bitted. As the clamps are of traditional type, no detailed description thereof is required.

The slide 8 is mounted on a support of ball bearing or other type, enabling it to undergo independent movements in the two perpendicular horizontal directions (X axis and Y axis) under the command of a first lever.

The column 6 supports a motorized cutter arbor 16 for bitting the key blank and a fixed arbor 18 for the feeler 20, which senses the bitting pattern notches in the original key. Both the arbors are mounted on a single structure 22 movable vertically along the column 6 under the command of a second lever 24.

A compartment closed by a transparent cover 26 is provided in the lower surface of the movable structure 22 between the two arbors 16 and 18, and houses in its interior a light source consisting for example of a pair of LED rows.

In the front part of the structure 22 a machine control panel 28 is provided, below which, i.e. in a position facing the clamps 10, 12, there is a proximity sensor 30. This can be of any type, but preferably of reactive type (inductive or capacitive) such as to be sensitive to the movement of the body lying in front of it, and in particular to the movement of the operator's hands.

Non-reactive sensors can also evidently be used, in which case they also sense the presence of a body at rest in front of it.

The proximity sensor 30 acts within the electrical power circuit for the light source, to activate it when sensitized. Connected into the same circuit there is also a delay circuit to cause deactivation of the light source a certain time after the sensor has ceased to be sensitized. The intervention time for this delay circuit is preferably adjustable.

The duplicating machine according to the invention can also comprise, in traditional manner, a general switch 32 providing electrical power to all the relevant machine components, and a separate switch 34 providing electrical power to just the milling cutter motor.

The duplicating machine now described operates in the same manner as traditional duplicating machines with regard to the usual procedures which the operator has to carry out, i.e. positioning the key blank and the original key in the respective clamps 10, 12 and operating the two levers 14, 24 to implement all the procedures connected with correct execution of key duplication.

However in contrast to traditional duplicating machines, in the duplicating machine of the invention the light source is switched on by merely bringing an operator's hand into the operative area, i.e. in proximity to the clamps, without any specific activation by the operator.

In this manner, correct positioning of the key in the respective clamps, their closure and the correct positioning of the feeler on the various notches of the original key and, if required, substitution of the feeler and of the cutter in the respective arbors, take place under conditions of perfect visibility and hence of absolute safety and precision.

In addition, the elimination of switches for switching the light source on and off simplifies the machine construction while at the same time eliminating electrical components (the switch), hence making the system more reliable.

Finally the certainty of having the light source activated for only the time required for the duplication operations also results in an energy saving.

## Claims

1. An improved key duplicating machine provided with a lamp to illuminate the machine operative area, **characterised by** comprising:
- at least one proximity sensor (30) positioned within the machine operative area,
- an electrical power circuit for said lamp, activatable by said sensor when an operator's hand enters said operative area.
- means for deactivating said power circuit a predetermined time after said sensor (30) has ceased to sense the presence of said hand.

2. A machine as claimed in claim 1, **characterised in that** the proximity sensor is of reactive type.

3. A machine as claimed in claim 1, **characterised in that** the proximity sensor is of non-reactive type.

4. A machine as claimed in one or more of the preceding claims, **characterised in that** said deactivation means consist of an adjustable timer.

## Patentansprüche

1. Verbesserte Schlüsselkopiermaschine, die mit einer Lampe ausgestattet ist, um den Maschinenarbeitsbereich zu beleuchten, **dadurch gekennzeichnet, dass** sie Folgendes umfasst:
- mindestens einen Näherungssensor (30), der innerhalb des Maschinenarbeitsbereichs positioniert ist;
- eine Stromschaltung für die Lampe, die durch den Sensor aktiviert werden kann, wenn eine Bedienerhand in den Arbeitsbereich eintritt,
- Mittel zum Deaktivieren der Stromschaltung eine vorbestimmte Zeit, nachdem der Sensor (30) aufgehört hat, die Anwesenheit der Hand zu erfassen.

2. Maschine nach Anspruch 1, **dadurch gekennzeichnet, dass** der Näherungssensor vom reaktiven Typ ist.

3. Maschine nach Anspruch 1, **dadurch gekennzeichnet, dass** der Näherungssensor vom nicht-reaktiven Typ ist.

4. Maschine nach einem oder mehreren der vorhergehenden Ansprüche, **dadurch gekennzeichnet, dass** das Deaktivierungsmittel aus einem einstellbaren Zeitgeber besteht.

## Revendications

1. Duplicateur de clé amélioré pourvu d'une lampe pour éclairer la zone fonctionnelle de la machine, **caractérisé en ce qu'**il comprend :
- au moins un capteur de proximité (30) positionné à l'intérieur de la zone fonctionnelle de la machine,
- un circuit de puissance électrique pour ladite lampe, pouvant être activé par ledit capteur lorsque la main d'un utilisateur pénètre dans ladite zone fonctionnelle,
- un moyen pour désactiver ledit circuit de puissance à un moment prédéterminé après que ledit capteur (30) a cessé de détecter la présence de ladite main.

2. Machine selon la revendication 1, **caractérisée en ce que** le capteur de proximité est du type réactif.

3. Machine selon la revendication 1, **caractérisée en ce que** le capteur de proximité est du type non réactif.

4. Machine selon l'une ou plusieurs des revendications précédentes, **caractérisée en ce que** ledit moyen de désactivation consiste en une minuterie réglable.
